# FASCICULE DE BREVET EUROPEEN

(11) **EP 3 917 795 B1**
(45) Date de publication et mention de la délivrance du brevet: **28.01.2026**
(21) Numéro de dépôt: 19842795.7
(22) Date de dépôt: 09.12.2019
(51) Int. Cl.: B60K 6/48, B60K 6/387, B60K 6/52, B60K 6/547, B60W 50/14

(54) **PROCÉDÉ ET DISPOSITIF D'ASSISTANCE D'UN CONDUCTEUR DE VÉHICULE HYBRIDE PARALÈLLE À BOÎTE DE VITESSES MANUELLE, PAR PROPOSITION D'UNE POSITION OPTIMALE, AINSI QUE VÉHICULE**
VERFAHREN UND VORRICHTUNG ZUR UNTERSTÜTZUNG EINES FAHRERS EINES PARALLELEN HYBRIDFAHRZEUGS MIT EINEM HANDSCHALTGETRIEBE DURCH VORSCHLAGEN EINER OPTIMALEN POSITION, SOWIE FAHRZEUG
METHOD AND DEVICE FOR ASSISTING A DRIVER OF A PARALLEL HYBRID VEHICLE WITH A MANUAL GEARBOX BY PROPOSING AN OPTIMAL POSITION, AND VEHICLE

(30) Priorité: 29.01.2019 FR 1900769
(43) Date de publication de la demande: 08.12.2021
(73) Titulaire: Stellantis Auto SAS, 78300 Poissy (FR)
(72) Inventeur: GALVIN, Mathias, 75011 PARIS (FR)
(74) Mandataire: PSIP
(86) Numéro de dépôt international: PCT/FR2019/052980
(87) Numéro de publication internationale: WO 2020/157393

(56) Documents cités:
- EP-A1- 2 574 829
- EP-A1- 2 574 829
- EP-A1- 3 009 319
- EP-A1- 3 009 319
- FR-A1- 2 994 151
- FR-A1- 2 994 151

## Description

### Domaine technique de l'invention

L'invention concerne les véhicules qui comprennent une chaîne de transmission dite hybride parallèle, comportant au moins une machine motrice et un moteur thermique couplé à un embrayage et à une boîte de vitesses manuelle, et plus précisément l'assistance des conducteurs de tels véhicules.

### Etat de la technique

On notera que l'invention concerne les chaînes de transmission hybrides parallèles dans lesquelles une machine motrice électrique est propre à entraîner soit le même train que celui qui est entraîné par le moteur thermique si sa liaison avec ce train est située en aval de la boîte de vitesses, soit un autre train de transmission que celui qui est entraîné par le moteur thermique. Par ailleurs, l'invention concerne non seulement les véhicules hybrides de type dit HEV (« Hybrid Electric Vehicle ») mais également les véhicules de type dit PHEV (« Plugin Hybrid Electric Vehicle »).

Actuellement, la quasi-totalité des chaînes de transmission de type hybride parallèle sont automatisées (c'est-à-dire à boîte de vitesses robotisée). Cela permet en effet de choisir le mode de transmission (électrique et/ou thermique), de gérer l'embrayage du moteur thermique et l'organe de couplage de la machine motrice électrique, et de gérer la transmission (sélection et engagement du rapport de démultiplication entre le moteur thermique et les roues du train associé) au moyen d'un algorithme qui interprète la volonté du conducteur en fonction, notamment, de la vitesse du véhicule, de l'enfoncement de la pédale d'accélérateur et de l'enfoncement de la pédale de frein.

Ce type de chaîne de transmission automatisée étant assez onéreux, on peut remplacer la boîte de vitesses robotisée par une boîte de vitesses de type manuel et contrôlée par un levier de vitesse dont la position sélectionnée permet au conducteur de sélectionner, d'une part, des rapports dits thermiques, et, d'autre part, des rapports dits électriques et un état neutre sur une ligne de neutre. On peut ainsi instaurer un mode de fonctionnement électrique du véhicule sans intervention supplémentaire du conducteur et sans ajout d'un actionneur ni d'un algorithme spécifique. En complément de la réduction du coût du véhicule, ce remplacement permet à la chaîne de transmission d'offrir les principales prestations d'un véhicule hybride à boîte de vitesses robotisée (et notamment un roulage dit ZEV (zéro émission de polluant et de CO₂), une réduction de la consommation, et un complément de puissance (ou « boost »).

Cependant, dans la pratique, en raison du nombre élevé de positions différentes dans lesquelles le levier de vitesse peut être placé, certains conducteurs éprouvent des difficultés à choisir le rapport électrique ou thermique qui est le mieux adapté à la situation de vie en cours de leur véhicule. Par conséquent, il peut arriver que le choix du conducteur ne soit pas optimal, ce qui peut nuire aux performances de son véhicule et/ou induire une surconsommation de carburant.

On connait en outre du document de brevet EP-2574829-A1 un procédé conforme au préambule de la revendication 1.

L'invention a donc notamment pour but d'améliorer la situation.

### Présentation de l'invention

Elle propose notamment à cet effet un procédé d'assistance selon la revendication 1, destiné à assister un conducteur d'un véhicule comprenant une chaîne de transmission hybride parallèle comportant une machine motrice de type électrique et associée à au moins une batterie rechargeable ayant un état de charge en cours (défini par un indicateur), et un moteur thermique couplé à un embrayage et à une boîte de vitesses de type manuel et contrôlée par un levier de vitesse dont la position sélectionnée par le conducteur permet de sélectionner des rapports dits thermiques, et des rapports dits électriques et un état neutre sur une ligne de neutre.

Ce procédé d'assistance comprend:
- une première étape dans laquelle on détermine une position optimale pour le levier de vitesse pour un instant en cours en fonction de l'état de charge en cours et d'une vitesse en cours du véhicule, et
- une seconde étape dans laquelle on détermine si cette position optimale déterminée doit être proposée au conducteur, en fonction d'un couple de consigne aux roues du véhicule déterminé pour cet instant en cours, d'un couple maximal que peut fournir la machine motrice à cet instant en cours, et de la position du levier de vitesse sélectionnée par le conducteur.

On peut ainsi assister à chaque instant le conducteur du véhicule en lui indiquant la position optimale du levier de vitesse permettant d'optimiser le couple consommation d'énergie/performances du groupe motopropulseur (ou GMP), lorsque cela s'avère utile.

Selon l'invention, dans ladite seconde étape, lorsque ladite position optimale correspond à un rapport électrique et que ledit couple de consigne déterminé est inférieur audit couple maximal que peut fournir ladite machine motrice, on détermine si ladite position sélectionnée est identique à ladite position optimale, et dans l'affirmative on ne propose pas ladite position optimale audit conducteur, tandis que dans la négative on détermine si ledit levier de vitesse est dans un état neutre alors que ledit embrayage n'est pas dans une position ouverte, et dans l'affirmative on ne propose pas ladite position optimale audit conducteur, tandis que dans la négative on propose ladite position optimale audit conducteur.

Le procédé d'assistance selon l'invention peut comporter d'autres caractéristiques qui peuvent être prises séparément ou en combinaison, et notamment :
- dans la seconde étape, lorsque la position optimale déterminée correspond à un rapport électrique et le couple de consigne déterminé est supérieur au couple maximal que peut fournir la machine motrice, on peut ne pas proposer cette position optimale au conducteur ;
- dans la seconde étape, lorsque la position optimale déterminée correspond à un rapport thermique, on peut déterminer si la position sélectionnée est identique à cette position optimale, et dans l'affirmative on ne propose pas cette position optimale au conducteur, tandis que dans la négative on détermine si le levier de vitesse est dans un état neutre alors que l'embrayage n'est pas dans une position ouverte, et dans l'affirmative on ne propose pas cette position optimale au conducteur, tandis que dans la négative on propose cette position optimale au conducteur ;
- dans sa seconde étape on peut proposer la position optimale au conducteur en affichant un message sur au moins un écran présent dans le véhicule et/ou en diffusant un message sonore avec au moins un haut-parleur présent dans le véhicule ;
- dans sa première étape soit on peut déterminer une position optimale correspondant à un rapport thermique lorsque l'état de charge est inférieur à un seuil de charge prédéfini ou lorsque l'état de charge est supérieur à ce seuil de charge prédéfini et la vitesse en cours est supérieure à un seuil de vitesse prédéfini, soit on peut déterminer une position optimale correspondant à un rapport électrique lorsque l'état de charge est supérieur à ce seuil de charge prédéfini et la vitesse en cours est inférieure à ce seuil de vitesse prédéfini ;
- dans sa première étape on peut déterminer une position optimale correspondant à un rapport thermique en fonction de la vitesse en cours et d'une valeur qui est représentative d'un pourcentage d'enfoncement d'une pédale d'accélérateur du véhicule.

L'invention propose également un dispositif d'assistance selon la revendication 7.

L'invention propose également un véhicule selon la revendication 8, éventuellement de type automobile.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un véhicule comprenant une chaîne de transmission hybride parallèle et un calculateur de supervision équipé d'un dispositif d'assistance selon l'invention,
[Fig. 2] illustre schématiquement un exemple de grille de sélection de vitesse associée à un levier de vitesse d'un véhicule du type de celui illustré sur la figure 1, et
[Fig. 3] illustre schématiquement un exemple d'algorithme mettant en œuvre un procédé d'assistance selon l'invention.

### Description détaillée de l'invention

L'invention a notamment pour but de proposer un procédé d'assistance, et un dispositif d'assistance DA associé, destinés à assister le conducteur d'un véhicule V à chaîne de transmission hybride parallèle comportant une machine motrice MM de type électrique, un moteur thermique MT et une boîte de vitesses BV de type manuel.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule terrestre.

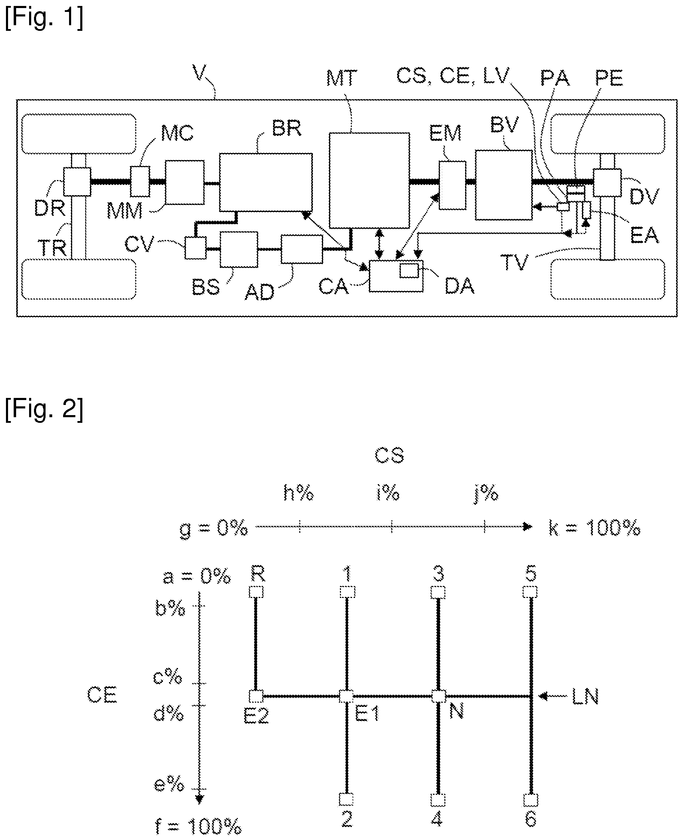

On a schématiquement représenté sur la figure 1 un véhicule V comprenant une chaîne de transmission hybride parallèle, un calculateur de supervision CA, et un dispositif d'assistance DA selon l'invention.

La chaîne de transmission (hybride parallèle) comprend un groupe motopropulseur (ou GMP) hybride dont le fonctionnement est supervisé (ou géré) par le calculateur de supervision CA, un embrayage EM, une boîte de vitesses BV de type manuel, et un éventuel moyen de couplage/découplage MC.

Le GMP hybride comprend notamment un moteur thermique MT, au moins une machine motrice MM électrique, et au moins une batterie rechargeable BR.

On entend ici par « moteur thermique MT » un moteur consommant du carburant ou des produits chimiques.

Le moteur thermique MT comprend un vilebrequin (non représenté) qui est solidarisé fixement à un arbre moteur afin d'entraîner ce dernier en rotation.

La boîte de vitesses BV (manuelle) comprend au moins un arbre d'entrée (ou primaire) destiné à recevoir le couple produit par le moteur thermique MT via l'embrayage EM, et un arbre de sortie destiné à recevoir ce couple via l'arbre d'entrée afin de le communiquer à un arbre de transmission auquel il est couplé et qui est couplé indirectement aux roues (ici du train avant TV du véhicule V), de préférence via un différentiel avant DV. Par exemple, l'embrayage EM comprend un volant moteur solidarisé fixement à l'arbre moteur et un disque d'embrayage solidarisé fixement à l'arbre d'entrée de la boîte de vitesses BV.

Cet embrayage EM peut être placé soit dans une position ee ouverte (ou débrayée) dans laquelle il découple totalement le moteur thermique MT de la boîte de vitesses BV, soit dans une position ee fermée (ou embrayée) dans laquelle il couple le moteur thermique MT à la boîte de vitesses BV, soit dans une position ee intermédiaire (ou glissante) dans laquelle il commence à découpler/coupler le moteur thermique MT de/à la boîte de vitesses BV.

Le fonctionnement de cette boîte de vitesses BV est contrôlé par un levier de vitesse LV qui est actionnable par le conducteur du véhicule V.

Plus précisément, ce levier de vitesse LV permet au conducteur de sélectionner, d'une part, des rapports dits thermiques, et, d'autre part, des rapports dits électriques et un état neutre sur une ligne de neutre LN.

On a schématiquement illustré sur la figure 2 un exemple de grille de sélection de vitesse associée à un levier de vitesse LV d'un véhicule V du type de celui illustré sur la figure 1. Cet exemple de grille est adapté à une boîte de vitesses manuelle BV comprenant trois rapports impairs (1, 3 et 5), trois rapports pairs (2, 4 et 6) et un rapport de marche arrière (thermique) R, et comprend également une ligne de neutre LN donnant accès à un état neutre N de la boîte de vitesses manuelle BV, une marche avant électrique E1 avec la machine motrice MM et une marche arrière électrique E2 avec la machine motrice MM. On comprendra que lorsque le levier de vitesse LV est placé dans la position E1 par le conducteur, cela signifie que ce dernier veut que la chaîne de transmission fonctionne en marche avant exclusivement avec la machine motrice MM. De même, lorsque le levier de vitesse LV est placé dans la position E2 par le conducteur, cela signifie que ce dernier veut que la chaîne de transmission fonctionne en marche arrière exclusivement avec la machine motrice MM. Dans toutes les autres positions, le conducteur veut que la chaîne de transmission fonctionne avec le moteur thermique MT, sauf lorsque la boîte de vitesses BV est dans un état neutre (ou point mort).

La machine motrice MM est une machine ou un moteur électrique destiné(e) à fournir du couple pour déplacer le véhicule V, soit seul(e), soit en complément du moteur thermique MT. Pour ce faire, elle utilise l'énergie électrique qui est stockée dans la batterie rechargeable BR à laquelle elle est couplée, éventuellement via un onduleur (non représenté).

Par exemple, la batterie rechargeable BR est de type basse tension (par exemple environ 220 V) ou très basse tension (par exemple 48 V). Son état de charge en cours ec (défini par un indicateur) est connu à chaque instant par le calculateur de supervision CS.

L'éventuel moyen de couplage/découplage MC peut être chargé de coupler/découpler la machine motrice MM à un/d'un arbre de transmission afin de communiquer le couple qu'il produit grâce à l'énergie électrique stockée dans la batterie rechargeable BR. Cet arbre de transmission est chargé d'entraîner en rotation des roues d'un train. Cet éventuel moyen de couplage/découplage MC est par exemple un mécanisme à crabots ou un embrayage ou encore un convertisseur de couple hydraulique.

On notera que dans l'exemple de réalisation illustré non limitativement sur la figure 1, le moyen de couplage/découplage MC est chargé de coupler/découpler la machine motrice MM à un/d'un arbre de transmission qui est différent de celui auquel est couplé le moteur thermique MT (via l'embrayage EM). Ce couplage/découplage se fait ici sur le train arrière TR du véhicule V, via un différentiel arrière DR, à titre d'exemple illustratif. Mais dans une variante de réalisation non illustrée, le moyen de couplage/découplage MC pourrait être chargé de coupler/découpler la machine motrice MM à/de l'arbre de transmission auquel est couplé le moteur thermique MT (via l'embrayage EM), en aval de la boîte de vitesses BV. Dans une autre variante, la machine motrice MM pourrait être montée au niveau des roues arrière après le différentiel arrière DR, sans étage de démultiplication.

La chaîne de transmission comprend également une machine électrique AD (démarreur ou alterno-démarreur) qui est couplée au moteur thermique MT, notamment pour le lancer lors d'un démarrage. Comme illustré non limitativement sur la figure 1, cette machine électrique AD peut être également couplée à une batterie de servitude BS, par exemple de type très basse tension (par exemple 12 V, 24 V ou 48V). Mais elle pourrait être alimentée par la batterie rechargeable BR.

Egalement comme illustré non limitativement sur la figure 1, on peut aussi prévoir un convertisseur CV de type DC/DC entre la batterie rechargeable BR et la batterie de servitude BS, de manière à assurer l'alimentation du réseau de bord du véhicule V si la machine électrique AD fonctionne à un niveau de tension différent.

Comme indiqué précédemment, l'invention propose de mettre en œuvre dans le véhicule V un procédé d'assistance destiné à assister le conducteur du véhicule V dans le choix de la position du levier de vitesse LV.

Un tel procédé peut être mis en œuvre par un dispositif d'assistance DA. Dans l'exemple non limitatif illustré sur la figure 1, le dispositif d'assistance DA fait partie du calculateur de supervision CA. Cela résulte du fait que le calculateur de supervision CA gère le GMP et donc à accès à de nombreux paramètres de fonctionnement du véhicule V. Mais cela n'est pas obligatoire. Ce dispositif (d'assistance) DA pourrait en effet être un équipement couplé au calculateur de supervision CA, directement ou indirectement. Il pourrait notamment faire partie d'un autre calculateur ou appareil. Dans tous les cas, ce dispositif (d'assistance) DA comprend au moins un processeur et au moins une mémoire coopérant ensemble, notamment pour déterminer une position optimale po pour le levier de vitesse LV pour un instant en cours, comme on le verra plus loin.

Le procédé, selon l'invention, comprend des première 10-40 et seconde 50-90 étapes.

Dans la première étape 10-40, on (le dispositif DA) détermine une position optimale po pour le levier de vitesse LV pour l'instant qui est en cours, en fonction de l'état de charge en cours ec et de la vitesse en cours vv du véhicule V. Ces état de charge en cours ec et vitesse en cours vv sont connus à chaque instant par le calculateur de supervision CS.

Par exemple, dans cette première étape 10-40 on (le dispositif DA) peut déterminer une position optimale po qui correspond à un rapport thermique en fonction de la vitesse en cours vv et d'une valeur qui est représentative d'un pourcentage d'enfoncement de la pédale d'accélérateur PA du véhicule V. Ce pourcentage d'enfoncement est représentatif de la volonté du conducteur en matière d'accélération à l'instant en cours.

Egalement par exemple, dans cette première étape 10-40 on (le dispositif DA) peut soit déterminer une position optimale po qui correspond à un rapport thermique lorsque l'état de charge ec est inférieur à un seuil de charge s1 prédéfini, ou lorsque l'état de charge ec est supérieur à ce seuil de charge s1 prédéfini et que dans le même temps la vitesse en cours vv est supérieure à un seuil de vitesse s2 prédéfini, soit déterminer une position optimale po qui correspond à un rapport électrique lorsque l'état de charge ec est supérieur au seuil de charge s1 prédéfini et que dans le même temps la vitesse en cours vv est inférieure au seuil de vitesse s2 prédéfini.

A titre d'exemple, le seuil de charge s1 peut être compris entre environ 1% de la charge maximale et environ 20% de cette charge maximale. Ainsi, le seuil de charge s1 peut, par exemple, être égal à 5% de la charge maximale.

Egalement à titre d'exemple, le seuil de vitesse s2 peut être compris entre environ 30 km/h et environ 70 km/h. Ainsi, le seuil de vitesse s2 peut, par exemple, être égal à 50 km/h.

Dans la seconde étape 50-90, on (le dispositif DA) détermine si la position optimale po (déterminée dans la première étape 10-40) doit être proposée au conducteur du véhicule V, en fonction d'un couple de consigne cc aux roues du véhicule V (il s'agit ici du couple total à fournir au niveau de l'ensemble des roues), déterminé pour l'instant en cours par le calculateur de supervision CA, d'un couple maximal cₘₐₓ que peut fournir la machine motrice MM à cet instant en cours, et de la position pl du levier de vitesse LV qui a été sélectionnée par le conducteur. On notera que le couple maximal cₘₐₓ peut varier dans le temps en raison de la caractéristique propre de la machine motrice MM qui a généralement une partie iso couple (à basse vitesse) puis une partie iso puissance.

Ainsi, on peut assister à chaque instant le conducteur du véhicule V en lui indiquant la position optimale po du levier de vitesse LV de nature à optimiser le couple consommation d'énergie/performances du GMP, lorsque cela s'avère utile.

La position pl du levier de vitesse LV est déterminée par au moins un capteur qui est couplé à ce dernier (LV), et de préférence par deux capteurs CE et CS, comme illustré non limitativement sur les figures 1 et 2. Par exemple, un premier capteur (ou capteur de sélection) CS peut être agencé de manière à déterminer la position sélectionnée du levier de vitesse LV, et un second capteur (ou capteur d'engagement) CE peut être agencé de manière à déterminer si un rapport thermique (n°1 à 6 ou R) ou électrique (E1 ou E2) ou la position neutre (N) est engagé(e) ou en cours d'engagement. Pour ce faire, ces premier CS et second CE capteurs peuvent mesurer des pourcentages. Ils sont alors de type proportionnel.

Dans l'exemple illustré non limitativement sur la figure 2 :
- lorsque le premier capteur CS délivre une valeur comprise entre g = 0% et h%, cela signifie que le rapport thermique de marche arrière R ou le rapport électrique de marche arrière E2 a été sélectionné,
- lorsque le premier capteur CS délivre une valeur comprise entre h% et i%, cela signifie que le rapport thermique n°1 ou le rapport électrique de marche avant E1 ou le rapport thermique n°2 a été sélectionné,
- lorsque le premier capteur CS délivre une valeur comprise entre i% et j%, cela signifie que le rapport thermique n°3 ou l'état neutre N ou le rapport thermique n°4 a été sélectionné,
- lorsque le premier capteur CS délivre une valeur comprise entre j% et k = 100%, cela signifie que le rapport thermique n°5 ou le rapport thermique n°6 a été sélectionné,
- lorsque le second capteur CE délivre une valeur comprise entre a = 0% et b%, cela signifie que le rapport thermique de marche arrière R ou l'un des rapports thermiques impairs (n°1, 3 ou 5) est engagé dans la boîte de vitesses BV,
- lorsque le second capteur CE délivre une valeur comprise entre c% et d%, cela signifie que le rapport électrique de marche arrière E2 ou le rapport électrique de marche avant E1 ou l'état neutre N est sélectionné sur la ligne de neutre LN,
- lorsque le second capteur CE délivre une valeur comprise entre e% et f = 100%, cela signifie que l'un des rapports thermiques pairs (n°2, 4 ou 6) est engagé dans la boîte de vitesses BV,
- lorsque le second capteur CE délivre une valeur comprise entre b% et c% ou entre d% et e%, cela signifie qu'il n'y a pas d'engagement de rapport.

Selon l'invention, dans la seconde étape 50-90 lorsque la position optimale po correspond à un rapport électrique (ici E1 ou E2) et que le couple de consigne cc déterminé est inférieur au couple maximal cₘₐₓ que peut fournir la machine motrice MM, on (le dispositif DA) détermine si la position pl du levier de vitesse LV sélectionnée par le conducteur est identique à cette position optimale po. Dans l'affirmative, on (le dispositif DA) ne propose pas cette position optimale po au conducteur, car il est inutile de proposer au conducteur une information susceptible d'attirer son attention alors même que la position pl qu'il a sélectionnée est la même que la position optimale po venant d'être déterminée. En revanche, dans la négative (cc > cₘₐₓ), on (le dispositif DA) détermine si le levier de vitesse LV est dans un état neutre N alors que l'embrayage EM n'est pas dans une position ee ouverte (et donc est en position fermée ou glissante). Dans l'affirmative, on (le dispositif DA) ne propose pas la position optimale po au conducteur. En effet, si ce dernier décide de se mettre au point mort/neutre et de relâcher le pied de la pédale d'embrayage (c'est-à-dire embrayage fermé ou glissant pendant le transitoire), c'est qu'il ne souhaite pas engager de rapport (par exemple pour du « Stop & Start » à basse vitesse ou pour laisser filer en descente), et dans ce cas on arrête de lui afficher la position optimale. En revanche, dans la négative on (le dispositif DA) propose la position optimale po au conducteur. En effet, dès que le conducteur va de nouveau enfoncer sa pédale d'embrayage (embrayage ouvert) c'est qu'il va vouloir à nouveau engager un rapport (par exemple pour accélérer), et dans ce cas on lui réaffiche tout de suite la position optimale.

La position de l'embrayage EM est déterminée par un capteur qui est couplé à ce dernier (EM) et qui fournit des mesures au calculateur de supervision CA. Par exemple, un tel capteur peut être de type proportionnel. Il est alors agencé de manière à mesurer le pourcentage d'enfoncement de la pédale d'embrayage PE. Dans ce cas, la position ee ouverte correspond à un enfoncement compris entre 0% et x1%, la position glissante correspond à un enfoncement compris entre x1% et x2%, et la position fermée correspond à un enfoncement compris entre x2% et 100%. Par exemple, et non limitativement, x1 peut être compris entre 30% et 50% et x2 peut être compris entre 70% et 80%.

Egalement par exemple, dans la seconde étape 50-90 lorsque la position optimale po correspond à un rapport électrique (ici E1 ou E2) et que le couple de consigne cc déterminé est supérieur au couple maximal cₘₐₓ que peut fournir la machine motrice MM, on (le dispositif DA) peut ne pas proposer cette position optimale po au conducteur. On considère en effet que la machine motrice MM ne pourra pas satisfaire la demande de couple à l'instant en cours, et donc qu'il est inutile de proposer au conducteur de sélectionner un rapport électrique.

Egalement par exemple, dans la seconde étape 50-90 lorsque la position optimale po correspond à un rapport thermique (ici n°1 à n°6 ou R), on (le dispositif DA) peut déterminer si la position pl du levier de vitesse LV sélectionnée par le conducteur est identique à la position optimale po. Dans l'affirmative, on (le dispositif DA) peut ne pas proposer cette position optimale po au conducteur, car il est inutile de proposer au conducteur une information susceptible d'attirer son attention alors même que la position pl qu'il a sélectionnée est la même que la position optimale po venant d'être déterminée. En revanche, dans la négative on (le dispositif DA) détermine si le levier de vitesse LV est dans un état neutre N alors que l'embrayage EM n'est pas dans une position ee ouverte (et donc est en position fermée ou glissante). Dans l'affirmative, on (le dispositif DA) ne propose pas la position optimale po au conducteur. En revanche, dans la négative on (le dispositif DA) propose la position optimale po au conducteur.

On notera que dans la seconde étape 50-90 on (le dispositif DA) peut proposer la position optimale po au conducteur en affichant un (ou en déclenchant l'affichage d'un) message sur au moins un écran EA présent dans le véhicule V et/ou en diffusant un (ou en déclenchant la diffusion d'un) message sonore avec au moins un haut-parleur présent dans le véhicule V.

L'écran EA, éventuellement utilisé, peut, par exemple, faire partie du tableau de bord du véhicule V ou de la planche de bord du véhicule V (dans ce cas il peut, par exemple, appartenir au combiné central), ou bien être une partie du pare-brise du véhicule V située devant le volant et le tableau de bord et utilisé par un dispositif d'affichage de type dit « tête haute ». Mais cet écran pourrait aussi faire partie d'un équipement de communication (comme par exemple un téléphone intelligent (ou « smartphone ») ou une tablette électronique), appartenant au conducteur et temporairement présent dans le véhicule V.

Le haut-parleur, éventuellement utilisé, peut être installé de façon permanente dans le véhicule V ou bien peut faire partie d'un équipement de communication (comme par exemple un téléphone intelligent ou une tablette électronique), appartenant au conducteur et temporairement présent dans le véhicule V.

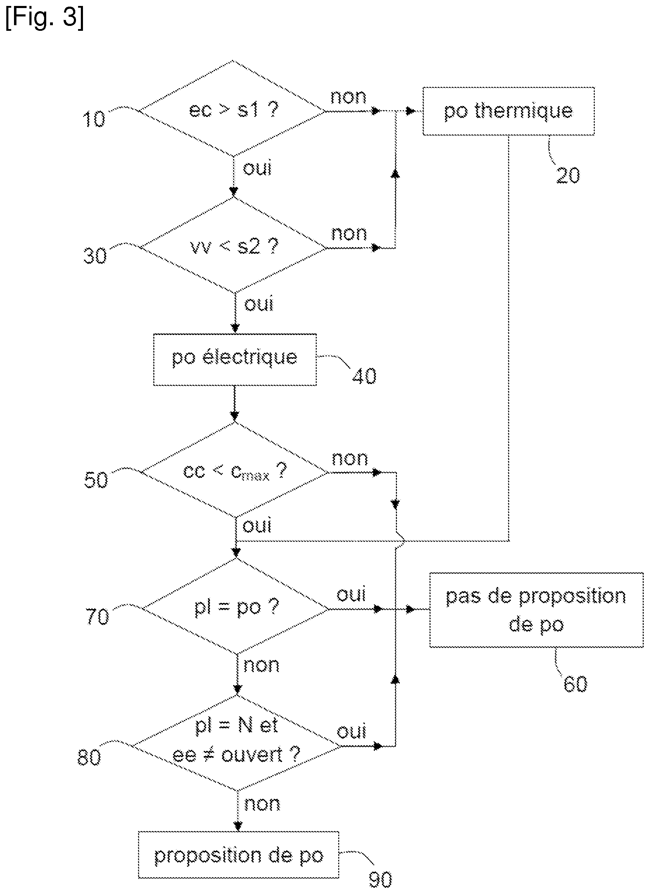

On a schématiquement illustré sur la figure 3 un exemple d'algorithme mettant en œuvre les première 10-40 et seconde 50-90 étapes du procédé d'assistance décrit ci-avant.

Dans une première sous-étape 10 de la première étape, on (le dispositif DA) effectue un test afin de déterminer si l'état de charge ec est supérieur au seuil de charge s1 prédéfini.

Dans la négative (« non » - ec < s1), on (le dispositif DA) détermine dans une deuxième sous-étape 20 de la première étape une position optimale po (du levier de vitesse LV) qui correspond à un rapport thermique.

Dans l'affirmative (« oui » - ec > s1), on (le dispositif DA) effectue un test dans une troisième sous-étape 30 de la première étape afin de déterminer si la vitesse en cours vv est inférieure au seuil de vitesse s2 prédéfini.

Dans la négative (vv > s2), on (le dispositif DA) détermine dans la deuxième sous-étape 20 de la première étape une position optimale po (du levier de vitesse LV) qui correspond à un rapport thermique.

Dans l'affirmative (vv < s2), on (le dispositif DA) détermine dans une quatrième sous-étape 40 de la première étape une position optimale po qui correspond à un rapport électrique.

Puis, dans une cinquième sous-étape 50 de la seconde étape on (le dispositif DA) effectue un test afin de déterminer si le couple de consigne cc qui vient d'être déterminé par le calculateur de supervision CA est inférieur au couple maximal cₘₐₓ que peut fournir la machine motrice MM.

Dans la négative (cc > cₘₐₓ), on (le dispositif DA) décide dans une sixième sous-étape 60 de la seconde étape de ne pas proposer la position optimale po déterminée au conducteur.

En revanche, dans l'affirmative (cc < cₘₐₓ), on (le dispositif DA) effectue un test dans une septième sous-étape 70 de la seconde étape afin de déterminer si la position pl du levier de vitesse LV sélectionnée par le conducteur est identique à la position optimale po déterminée dans la deuxième sous-étape 20 ou la quatrième sous-étape 40.

Dans l'affirmative, on (le dispositif DA) décide dans une sixième sous-étape 60 de la seconde étape de ne pas proposer la position optimale po déterminée au conducteur.

En revanche, dans la négative, on (le dispositif DA) détermine dans une huitième sous-étape 80 de la seconde étape si le levier de vitesse LV est dans un état neutre N alors que l'embrayage EM est en position fermée ou glissante.

Dans l'affirmative, on (le dispositif DA) décide dans une sixième sous-étape 60 de la seconde étape de ne pas proposer la position optimale po déterminée au conducteur.

En revanche, dans la négative, on (le dispositif DA) décide dans une neuvième sous-étape 90 de la seconde étape de proposer la position optimale po déterminée au conducteur.

On notera que sur la figure 1 le dispositif d'assistance DA est très schématiquement matérialisé par un simple rectangle au sein du calculateur de supervision CA. Mais comme évoqué précédemment, ce dispositif d'assistance DA comprend au moins un processeur, par exemple de signal numérique (ou DSP), et une mémoire vive pour stocker des instructions pour la mise en œuvre par ce processeur d'une partie du procédé d'assistance tel que décrit ci-avant, ainsi qu'éventuellement une mémoire de masse, notamment pour le stockage de données déterminées dans tous ses calculs et traitements (éventuellement intermédiaires) et de mesures ou informations fournies par des équipements du véhicule V. Par ailleurs, dans une variante de réalisation le dispositif d'assistance DA pourrait faire partie d'un autre calculateur que le calculateur de supervision CA. Dans une autre variante de réalisation, le dispositif d'assistance DA pourrait comprendre son propre calculateur. Dans ce cas, ce dernier calculateur peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique. Par ailleurs, quel que soit le calculateur considéré, il reçoit au moins des mesures ou paramètres de fonctionnement fournis par des équipements du véhicule V pour les utiliser dans des calculs ou traitements, éventuellement après les avoir mis en forme et/ou démodulés et/ou amplifiés, de façon connue en soi. De plus, ce calculateur peut être aussi éventuellement associé à une interface d'entrée pour la réception d'au moins les mesures ou paramètres de fonctionnement fournis par des équipements du véhicule V, et une interface de sortie, notamment pour la transmission de ses propositions de position optimale po du levier de vitesse LV.

Une ou plusieurs sous-étapes de chacune des première et seconde étapes du procédé d'assistance peuvent être effectuées par des composants différents. Ainsi, le procédé d'assistance peut-être mis en œuvre par une pluralité de processeurs de signal numérique, mémoire vive, mémoire de masse, interface d'entrée, interface de sortie.

## Revendications

1. Procédé d'assistance d'un conducteur d'un véhicule (V) comprenant une chaîne de transmission hybride parallèle comportant i) une machine motrice (MM) de type électrique et associée à au moins une batterie rechargeable (BR) ayant un état de charge en cours, et ii) un moteur thermique (MT) couplé à un embrayage (EM) et à une boîte de vitesses (BV) de type manuel et contrôlée par un levier de vitesse (LV) dont la position sélectionnée par ledit conducteur permet de sélectionner des rapports dits thermiques, et des rapports dits électriques et un état neutre sur une ligne de neutre, ce procédé comprenant a) une première étape (10-40) dans laquelle on détermine une position optimale pour ledit levier de vitesse (LV) pour un instant en cours en fonction dudit état de charge en cours et d'une vitesse en cours dudit véhicule (V), et b) une seconde étape (50-90) dans laquelle on détermine si ladite position optimale déterminée doit être proposée audit conducteur en fonction d'un couple de consigne aux roues dudit véhicule (V) déterminé pour ledit instant en cours, d'un couple maximal que peut fournir ladite machine motrice (MM) audit instant en cours, et de ladite position sélectionnée, **caractérisé en ce que** dans ladite seconde étape (50-90) lorsque ladite position optimale correspond à un rapport électrique et que ledit couple de consigne déterminé est inférieur audit couple maximal que peut fournir ladite machine motrice (MM), on détermine si ladite position sélectionnée est identique à ladite position optimale, et dans l'affirmative on ne propose pas ladite position optimale audit conducteur, tandis que dans la négative on détermine si ledit levier de vitesse (LV) est dans un état neutre alors que ledit embrayage (EM) n'est pas dans une position ouverte, et dans l'affirmative on ne propose pas ladite position optimale audit conducteur, tandis que dans la négative on propose ladite position optimale audit conducteur.

2. Procédé selon la revendication 1, **caractérisé en ce que** dans ladite seconde étape (50-90) lorsque ladite position optimale déterminée correspond à un rapport électrique et que ledit couple de consigne déterminé est supérieur audit couple maximal que peut fournir ladite machine motrice (MM), on ne propose pas ladite position optimale audit conducteur.

3. Procédé selon l'une des revendications 1 à 2, **caractérisé en ce que** dans ladite seconde étape (50-90) lorsque ladite position optimale déterminée correspond à un rapport thermique on détermine si ladite position sélectionnée est identique à ladite position optimale, et dans l'affirmative on ne propose pas ladite position optimale audit conducteur, tandis que dans la négative on détermine si ledit levier de vitesse (LV) est dans un état neutre alors que ledit embrayage (EM) n'est pas dans une position ouverte, et dans l'affirmative on ne propose pas ladite position optimale audit conducteur, tandis que dans la négative on propose ladite position optimale audit conducteur.

4. Procédé selon l'une des revendications 1 à 3, **caractérisé en ce que** dans ladite seconde étape (50-90) on propose ladite position optimale audit conducteur en affichant un message sur au moins un écran (EA) présent dans ledit véhicule (V) et/ou en diffusant un message sonore avec au moins un haut-parleur présent dans ledit véhicule (V).

5. Procédé selon l'une des revendications 1 à 4, **caractérisé en ce que** dans ladite première étape (10-40) soit on détermine une position optimale correspondant à un rapport thermique lorsque ledit état de charge est inférieur à un seuil de charge prédéfini ou lorsque ledit état de charge est supérieur audit seuil de charge prédéfini et ladite vitesse en cours est supérieure à un seuil de vitesse prédéfini, soit on détermine une position optimale correspondant à un rapport électrique lorsque ledit état de charge est supérieur audit seuil de charge prédéfini et ladite vitesse en cours est inférieure audit seuil de vitesse prédéfini.

6. Procédé selon l'une des revendications 1 à 5, **caractérisé en ce que** dans ladite première étape (10-40) on détermine une position optimale correspondant à un rapport thermique en fonction de ladite vitesse en cours et d'une valeur représentative d'un pourcentage d'enfoncement d'une pédale d'accélérateur dudit véhicule (V).

7. Dispositif d'assistance (DA) pour assister un conducteur d'un véhicule (V) comprenant une chaîne de transmission hybride parallèle comportant i) une machine motrice (MM) de type électrique et associée à au moins une batterie rechargeable (BR) ayant un état de charge en cours, et ii) un moteur thermique (MT) couplé à un embrayage (EM) et à une boîte de vitesses (BV) de type manuel et contrôlée par un levier de vitesse (LV) dont la position sélectionnée par ledit conducteur permet de sélectionner des rapports dits thermiques, et des rapports dits électriques et un état neutre sur une ligne de neutre, ledit dispositif comprenant au moins un processeur et au moins une mémoire coopérant ensemble pour déterminer une position optimale pour ledit levier de vitesse (LV) pour un instant en cours en fonction dudit état de charge en cours et d'une vitesse en cours dudit véhicule (V), et pour déterminer si ladite position optimale déterminée doit être proposée audit conducteur en fonction d'un couple de consigne aux roues dudit véhicule (V) déterminé pour ledit instant en cours, d'un couple maximal que peut fournir ladite machine motrice (MM) audit instant en cours, et de ladite position sélectionnée, **caractérisé en ce que** lorsque ladite position optimale correspond à un rapport électrique et que ledit couple de consigne déterminé est inférieur audit couple maximal que peut fournir ladite machine motrice (MM), le processeur détermine si ladite position sélectionnée est identique à ladite position optimale, et dans l'affirmative le processeur ne propose pas ladite position optimale audit conducteur, tandis que dans la négative le processeur détermine si ledit levier de vitesse (LV) est dans un état neutre alors que ledit embrayage (EM) n'est pas dans une position ouverte, et dans l'affirmative le processeur ne propose pas ladite position optimale audit conducteur, tandis que dans la négative le processeur propose ladite position optimale audit conducteur.

8. Véhicule comprenant une chaîne de transmission hybride parallèle comportant i) une machine motrice (MM) de type électrique et associée à au moins une batterie rechargeable (BR) ayant un état de charge en cours, et ii) un moteur thermique (MT) couplé à un embrayage (EM) et à une boîte de vitesses (BV) de type manuel et contrôlée par un levier de vitesse (LV) dont la position sélectionnée par ledit conducteur permet de sélectionner des rapports dits thermiques, et des rapports dits électriques et un état neutre sur une ligne de neutre, **caractérisé en ce qu'**il comprend en outre un dispositif d'assistance (DA) selon la revendication 7.

9. Véhicule selon la revendication 8, **caractérisé en ce qu'**il est de type automobile.

## Patentansprüche

1. Verfahren zur Unterstützung des Fahrers eines Fahrzeugs (V) mit einem Parallelhybridantrieb, der i) einen elektrischen Antriebsmotor (MM) mit mindestens einer wiederaufladbaren Batterie (BR) mit aktuellem Ladezustand und ii) eine Wärmekraftmaschine (MT) mit einer Kupplung (EM) und einem manuellen Schaltgetriebe (BV) umfasst, die über einen Schalthebel (LV) gesteuert wird, dessen vom Fahrer gewählte Stellung die Wahl zwischen sogenannten thermischen Gängen, sogenannten elektrischen Gängen und einem Leerlauf auf einer Neutrallinie ermöglicht, wobei das Verfahren a) einen ersten Schritt (10-40) zur Bestimmung der optimalen Stellung des Schalthebels (LV) für den aktuellen Zeitpunkt in Abhängigkeit vom aktuellen Ladezustand und der aktuellen Geschwindigkeit des Fahrzeugs (V) und b) einen zweiten Schritt (50-90) zur Bestimmung der optimalen Stellung des Schalthebels (LV) für den aktuellen Zeitpunkt in Abhängigkeit vom Solldrehmoment an den Rädern des Fahrzeugs (V) für den aktuellen Zeitpunkt oder vom maximalen Drehmoment, das der Antriebsmotor (MM) zu diesem Zeitpunkt liefern kann, vorschlägt, aktuelle Zeit und der gewählten Position, **dadurch gekennzeichnet, dass** im zweiten Schritt (50-90), wenn die optimale Position einem elektrischen Gang entspricht und das ermittelte Solldrehmoment kleiner ist als das maximale Drehmoment, das der Antriebsmotor (MM) bereitstellen kann, ermittelt wird, ob die gewählte Position mit der optimalen Position identisch ist. Ist dies der Fall, wird dem Fahrer die optimale Position nicht vorgeschlagen. Ist dies nicht der Fall, wird ermittelt, ob sich der Schalthebel (LV) in Neutralstellung befindet, während die Kupplung (EM) nicht geöffnet ist. Ist dies der Fall, wird dem Fahrer die optimale Position nicht vorgeschlagen. Ist dies nicht der Fall, wird dem Fahrer die optimale Position vorgeschlagen.

2. Verfahren nach Anspruch 1, **dadurch gekennzeichnet, dass** im zweiten Schritt (50-90), wenn die ermittelte optimale Position einem elektrischen Gang entspricht und das ermittelte Solldrehmoment größer ist als das maximale Drehmoment, das der Antriebsmotor (MM) bereitstellen kann, dem Fahrer die optimale Position nicht vorgeschlagen wird.

3. Verfahren nach einem der Ansprüche 1 bis 2, **dadurch gekennzeichnet, dass** im zweiten Schritt (50-90), wenn die ermittelte optimale Position einem thermischen Verhältnis entspricht, ermittelt wird, ob die gewählte Position mit der optimalen Position identisch ist. Ist dies der Fall, wird dem Fahrer die optimale Position nicht vorgeschlagen. Ist dies nicht der Fall, wird ermittelt, ob sich der Schalthebel (LV) in Neutralstellung befindet, während die Kupplung (EM) nicht geöffnet ist. Ist dies der Fall, wird dem Fahrer die optimale Position nicht vorgeschlagen. Ist dies nicht der Fall, wird dem Fahrer die optimale Position vorgeschlagen.

4. Verfahren nach einem der Ansprüche 1 bis 3, **dadurch gekennzeichnet, dass** im zweiten Schritt (50-90) dem Fahrer die optimale Position durch Anzeige einer Meldung auf mindestens einem im Fahrzeug (V) vorhandenen Bildschirm (EA) und/oder durch Ausstrahlen einer akustischen Meldung über mindestens einen im Fahrzeug (V) vorhandenen Lautsprecher vorgeschlagen wird.

5. Verfahren nach einem der Ansprüche 1 bis 4, **dadurch gekennzeichnet, dass** im ersten Schritt (10-40) entweder eine optimale Position entsprechend einem thermischen Verhältnis ermittelt wird, wenn der Ladezustand niedriger als ein vordefinierter Ladeschwellenwert ist oder wenn der Ladezustand höher als der vordefinierte Ladeschwellenwert und die aktuelle Geschwindigkeit höher als ein vordefinierter Geschwindigkeitsschwellenwert ist, oder eine optimale Position entsprechend einem elektrischen Verhältnis ermittelt wird, wenn der Ladezustand höher als der vordefinierte Ladeschwellenwert und die aktuelle Geschwindigkeit niedriger als der vordefinierte Geschwindigkeitsschwellenwert ist.

6. Verfahren nach einem der Ansprüche 1 bis 5, **dadurch gekennzeichnet, dass** im ersten Schritt (10-40) eine optimale Position entsprechend einem thermischen Verhältnis als Funktion der aktuellen Geschwindigkeit und eines Wertes ermittelt wird, der den prozentualen Niederdrückungsgrad des Gaspedals des Fahrzeugs (V) repräsentiert.

7. Assistenzvorrichtung (DA) zur Unterstützung des Fahrers eines Fahrzeugs (V), das einen Parallelhybridantrieb umfasst, der i) einen elektrischen Antriebsmotor (MM) mit mindestens einer wiederaufladbaren Batterie (BR) mit aktuellem Ladezustand und ii) eine Wärmekraftmaschine (MT) mit einer Kupplung (EM) und einem manuellen Schaltgetriebe (BV) umfasst, die über einen Schalthebel (LV) gesteuert wird, dessen vom Fahrer gewählte Stellung die Wahl zwischen sogenannten thermischen Gängen, sogenannten elektrischen Gängen und einem Leerlauf auf einer Neutrallinie ermöglicht, wobei die Vorrichtung mindestens einen Prozessor und mindestens einen Speicher umfasst, die zusammenwirken, um eine optimale Stellung des Schalthebels (LV) für einen aktuellen Zeitpunkt in Abhängigkeit vom aktuellen Ladezustand und der aktuellen Geschwindigkeit des Fahrzeugs (V) zu bestimmen und um zu bestimmen, ob die ermittelte optimale Stellung dem Fahrer in Abhängigkeit von einem Solldrehmoment an den Rädern des Fahrzeugs (V), das für den aktuellen Zeitpunkt bestimmt wurde, einem maximalen Drehmoment, das der Antriebsmotor (MM) im aktuellen Zeitpunkt liefern kann, und der gewählten Stellung vorgeschlagen werden soll, **dadurch gekennzeichnet, dass** bei die optimale Position einem elektrischen Übersetzungsverhältnis entspricht und das bestimmte Solldrehmoment kleiner ist als das maximale Drehmoment, das der Antriebsmotor (MM) liefern kann, ermittelt der Prozessor, ob die ausgewählte Position identisch mit der optimalen Position ist, und schlägt dem Fahrer in diesem Fall diese optimale Position nicht vor. Ist dies nicht der Fall, ermittelt der Prozessor, ob sich der Ganghebel (LV) in einem neutralen Zustand befindet, während sich die Kupplung (EM) nicht in einer offenen Position befindet, und schlägt dem Fahrer in diesem Fall diese optimale Position nicht vor. Ist dies nicht der Fall, schlägt der Prozessor dem Fahrer diese optimale Position nicht vor.

8. Fahrzeug mit einem Parallelhybridantrieb, umfassend i) einen elektrischen Antriebsmotor (MM), der mit mindestens einer wiederaufladbaren Batterie (BR) mit aktuellem Ladezustand verbunden ist, und ii) einen Wärmemotor (MT), der mit einer Kupplung (EM) und einem manuellen Getriebe (BV) gekoppelt ist und über einen Schalthebel (LV) gesteuert wird, dessen vom Fahrer gewählte Stellung die Wahl sogenannter Wärmegänge, sogenannter Elektrogänge und eines Leerlaufs auf einer Neutrallinie ermöglicht, **dadurch gekennzeichnet, dass** es außerdem eine Assistenzvorrichtung (DA) gemäß Anspruch 7 umfasst.

9. Fahrzeug nach Anspruch 8, **dadurch gekennzeichnet, dass** es vom Pkw-Typ ist.

## Claims

1. Method for assisting a driver of a vehicle (V) comprising a parallel hybrid transmission chain comprising i) a prime mover (MM) of the electric type and associated with at least one rechargeable battery (BR) having a current state of charge, and ii) a thermal engine (MT) coupled to a clutch (EM) and to a gearbox (BV) of the manual type and controlled by a gear lever (LV) whose position selected by said driver makes it possible to select so-called thermal gears, and so-called electric gears and a neutral state on a neutral line, this method comprising a) a first step (10-40) in which an optimal position for said gear lever (LV) is determined for a current instant as a function of said current state of charge and a current speed of said vehicle (V), and b) a second step (50-90) in which it is determined whether said determined optimal position must be proposed to said driver as a function of a setpoint torque at the wheels of said vehicle (V) determined for said current instant, of a maximum torque that can be provided said prime mover (MM) at said current time, and of said selected position, **characterized in that** in said second step (50-90) when said optimal position corresponds to an electrical gear and said determined setpoint torque is less than said maximum torque that said prime mover (MM) can provide, it is determined whether said selected position is identical to said optimal position, and if so, said optimal position is not proposed to said driver, while if not, it is determined whether said gear lever (LV) is in a neutral state while said clutch (EM) is not in an open position, and if so, said optimal position is not proposed to said driver, while if not, said optimal position is proposed to said driver.

2. Method according to claim 1, **characterized in that** in said second step (50-90) when said determined optimal position corresponds to an electrical gear and said determined setpoint torque is greater than said maximum torque that said prime mover (MM) can provide, said optimal position is not proposed to said driver.

3. Method according to one of claims 1 to 2, **characterized in that** in said second step (50-90) when said determined optimal position corresponds to a thermal ratio, it is determined whether said selected position is identical to said optimal position, and if so, said optimal position is not proposed to said driver, while if not, it is determined whether said gear lever (LV) is in a neutral state while said clutch (EM) is not in an open position, and if so, said optimal position is not proposed to said driver, while if not, said optimal position is proposed to said driver.

4. Method according to one of claims 1 to 3, **characterized in that** in said second step (50-90) said optimal position is proposed to said driver by displaying a message on at least one screen (EA) present in said vehicle (V) and/or by broadcasting an audible message with at least one loudspeaker present in said vehicle (V).

5. Method according to one of claims 1 to 4, **characterized in that** in said first step (10-40) either an optimal position corresponding to a thermal ratio is determined when said state of charge is lower than a predefined charge threshold or when said state of charge is higher than said predefined charge threshold and said current speed is higher than a predefined speed threshold, or an optimal position corresponding to an electrical ratio is determined when said state of charge is higher than said predefined charge threshold and said current speed is lower than said predefined speed threshold.

6. Method according to one of claims 1 to 5, **characterized in that** in said first step (10-40) an optimal position corresponding to a thermal ratio is determined as a function of said current speed and a value representative of a percentage of depression of an accelerator pedal of said vehicle (V).

7. Assistance device (DA) for assisting a driver of a vehicle (V) comprising a parallel hybrid transmission chain comprising i) a prime mover (MM) of the electric type and associated with at least one rechargeable battery (BR) having a current state of charge, and ii) a thermal engine (MT) coupled to a clutch (EM) and to a gearbox (BV) of the manual type and controlled by a gear lever (LV) whose position selected by said driver makes it possible to select so-called thermal gears, and so-called electric gears and a neutral state on a neutral line, said device comprising at least one processor and at least one memory cooperating together to determine an optimal position for said gear lever (LV) for a current instant as a function of said current state of charge and a current speed of said vehicle (V), and to determine whether said determined optimal position must be proposed to said driver as a function of a setpoint torque at the wheels of said vehicle (V) determined for said current instant, of a maximum torque that said prime mover (MM) can provide at said current instant, and of said selected position, **characterized in that** when said optimal position corresponds to an electrical ratio and said determined setpoint torque is less than said maximum torque that said prime mover (MM) can provide, the processor determines whether said selected position is identical to said optimal position, and if so the processor does not propose said optimal position to said driver, while if not the processor determines whether said gear lever (LV) is in a neutral state while said clutch (EM) is not in an open position, and if so the processor does not propose said optimal position to said driver, while if not the processor proposes said optimal position to said driver.

8. Vehicle comprising a parallel hybrid transmission chain comprising i) a prime mover (MM) of the electric type and associated with at least one rechargeable battery (BR) having a current state of charge, and ii) a thermal engine (MT) coupled to a clutch (EM) and to a gearbox (BV) of the manual type and controlled by a gear lever (LV) whose position selected by said driver makes it possible to select so-called thermal gears, and so-called electric gears and a neutral state on a neutral line, **characterized in that** it further comprises an assistance device (DA) according to claim 7.

9. Vehicle according to claim 8, **characterized in that** it is of the automobile type.
